(19) Europäisches Patentamt / European Patent Office / Office européen des brevets

(11) **EP 3 521 868 A1**

(12) **EUROPEAN PATENT APPLICATION**

(43) Date of publication:
**07.08.2019 Bulletin 2019/32**

(51) Int Cl.:
***G02B 1/06*** (2006.01)

(21) Application number: **18305099.6**

(22) Date of filing: **31.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicants:
• **Essilor International**
  **94220 Charenton-le-Pont (FR)**
• **UNIVERSITE DE MONTPELLIER**
  **34090 Montpellier (FR)**
• **CENTRE NATIONAL DE LA RECHERCHE SCIENTIFIQUE (CNRS)**
  **75016 Paris (FR)**

(72) Inventors:
• **ARCHAMBEAU, Samuel**
  **94227 CHARENTON LE PONT CEDEX (FR)**
• **BIVER, Claudine**
  **94220 CHARENTON-LE-PONT (FR)**
• **ETIENNE, Pascal**
  **34090 MONTPELLIER (FR)**
• **CALAS ETIENNE, Sylvie**
  **34090 MONTPELLIER (FR)**
• **BONNET, Laurent**
  **75794 PARIS Cédex 16 (FR)**

(74) Representative: **Cabinet Plasseraud**
  **66, rue de la Chaussée d'Antin**
  **75440 Paris Cedex 09 (FR)**

(54) **PHASE CHANGE OPTICAL DEVICE**

(57)     Optical device comprising:
- an aerogel located in an encapsulating structure,
- an optically non isotropic material presenting a refractive index which can be changed upon submitting said material to an electrical field, preferentially a liquid crystal mixture, embedded in the aerogel, and
- a first and a second electrodes arranged to generate an electric field in the encapsulating structure.

Figure 2

EP 3 521 868 A1

**Description**

The present invention relates to the field of optical devices, and more specifically to the field of active optical devices.

Optical devices with a variable refractive index have an increasing number of applications, especially in the field of eyewear. These devices usually integrate liquid crystals, which orientation and optical properties change when these are submitted to an electrical field. However, liquid crystals most often need to be used together with a polarizer due to the liquid crystals being birefringent in at least one of their orientation. Polarizers are costly and decrease the overall transparency of the optical device. As such, these are unsuitable for an ophthalmic use.

In order to bypass the need of polarizers in active optical devices, it is known to use a system comprising two layers of liquid crystal, with crossed orientations. However, such systems are complicated to implement as both layers have to present the exact same thickness. Furthermore, such system properties depend on the incident angle of the light which makes it unsuitable for a variety of uses.

Another known alternative to polarizers consists in using cholesteric liquid crystals. However, cholesteric liquid crystals are light-diffusing compounds and difficult to orient in the first place.

Polymer dispersed crystal liquids (PDCL) do constitute a polarizer-free alternative, but these are not satisfying either as their layers are generally light-diffusing and do not comprise enough crystal liquids to enable a satisfactory change in refractive index.

There is thus a need to provide a transparent optical device which refractive index can be significantly changed. Most importantly, such optical device has to be polarizer-free and must not be light-diffusing.

The present invention answers this need thanks to an optical device comprising:

- an aerogel located in an encapsulating structure,

- an optically non isotropic material presenting a refractive index which can be changed upon submitting said material to an electrical field , preferentially a liquid crystal mixture, embedded in the aerogel, and

- a first and a second electrodes arranged to generate an electric field in the encapsulating structure.

An aerogel is a material similar to a gel, in which the liquid phase has been replaced by a gas. Aerogels are ultraporous materials, the porosity of which typically reaches at least 75% of their volume. Such a high porosity gives these solids advantageous properties. Indeed, aerogels demonstrate very low refractive indexes, close to the air index (n < 1.35), aerogels are also very light. Aerogels are typically very prone to capillary strain, and the amount of water present in the open air can be enough to induce cracks in the aerogel.

The encapsulating structure allows protecting the aerogel of the present invention from the open air, since cracks are very much unsuited in most optical devices.

The invention solves the above-mentioned technical problem because it has been found that optically non isotropic material such as liquid crystals are in an isotropic state when embedded in an aerogel. Without being bound by this theory, the Applicant believes it is due to the aerogel porosities being small enough to induce a steric constraint on the optically non isotropic material molecules, thus preventing these to orient each other when they are not submitted to any electrical field.

Electrodes are arranged in order to be able to generate an electrical field in the encapsulating structure embedding the optically non isotropic material, thus orienting the latter and modifying the overall refractive index of the optical device. The encapsulating structure typically presents two faces separated by the aerogel, each face supporting one of the electrodes.

The electrodes can be of any type. Indium Tin Oxyde (ITO) is a favoured material because of its transparency and its good electrical properties. The electrodes can also include an array of selectively activable electrodes, so as to present a tunable shape. Such electrodes have been previously described in WO2015/136458 and FR1654021.

The electrodes can also demonstrate any suitable specific structure, such as the one described in WO 2010/040954, WO 2011/015753, or WO 2011/052013.

The optically non isotropic material molecules are typically oriented perpendicularly to the electrodes, that is to say in a direction parallel to the incident light in case the electrodes are positioned on the external faces of the optical device. As such, although the optically non isotropic material is in an homeotropic state, overall it is equivalent to an isotropic state for the incident light. The invention thus provides an optical medium which changes from a first isotropic state to a second isotropic state presenting a different refractive index than the first isotropic state.

The terms *optical index* and *refractive index* are used indifferently and relate to the same physical property. The method used to measure it is not relevant to the concept of the present invention since the present invention relates to a change of the optical index, depending on the fact that the material of interest is submitted to an electric field or not.

The optically non isotropic material can be birefringent, which means that the optical index is not the same depending on the direction of the incident light. Unless stated otherwise, for the purpose of the invention, the incident light is considered to be oriented in a direction perpendicular to the electrodes.

The optically non isotropic material is preferably in an isotropic state when no electrical field is applied in the encapsulating structure.

The aerogel has a porosity ratio which is preferably greater than 80%. The porosity ratio corresponds to the percentage of gas in the volume of the aerogel. It can be measured through helium pycnometry, or through any other suitable method **[pourriez-vous préciser les méthodes de mesure utilisées ?].** As a matter of fact, a high porosity ratio allows storing a higher amount of optically non isotropic material, which leads to a higher tunability of the optical index.

The optically non isotropic material can typically be nematic liquid crystal mixture. The nematic liquid crystals are convenient to synthetize, not too expensive, and demonstrate good compatibility with the present invention. However, any other type of liquid crystal mixture can be used for the purpose of the invention. For instance, although such materials are expensive and difficult to synthetize, a cholesteric phase containing a chiral doping compound could be incorporated in the optically non isotropic material.

The aerogel can comprise remnant parts of Tetra-methoxysilane, Tetraethoxysilane, Trimethoxysilane or Methyltrimethoxysilane mixed in a polymer binder. These can also be referred to as silicon based monomers.

The aerogel can be made by combining one of the group consisting of Tetra-methoxysilane, Tetraethoxysilane, Trimethoxysilane and Methyltrimethoxysilane with a polymer binder.

The polymer binder can be a polyvinyl acetate polymer with a weight average molecular weight greater than 50 000 g/mol, and preferably greater than 100 000 g/mol.

The encapsulating structure is preferably completely filled by the aerogel, and the aerogel has a thickness greater than 10 $\mu$m, preferably greater than 20 $\mu$m, more preferably greater than 50 $\mu$m. Indeed, a thick aerogel is steadier and is easier to fill completely with the optically non isotropic material. Furthermore, the aerogel is the optically active part of the optical device, which needs to be protected.

The first and second electrodes can be linked to an electronic device, configured to control the electric field generated in the encapsulating structure, and to a power source. This would allow the electronic device to indirectly control the optical index of the optical device.

The optical device is preferably a spectacle lens. Spectacle lenses are used to correct vision, however, the correction needed is not always the same. Most importantly, it changes with the distance at which the object to be envisioned is positioned. As such, it is very advantageous to provide a spectacle lens with a tunable optical index, that is to say a tunable correction.

The present invention also relates to a process for manufacturing an optical article, comprising the steps of

a) providing an encapsulating structure,
b) providing a liquid crystal mixture embedded in an aerogel inside said encapsulating structure.

Step b) of the process according to the present invention can comprise a first sub-step of forming an aerogel and a second substep of embedding a liquid crystal mixture in the aerogel.

In that case, the first sub-step consisting of forming an aerogel preferably comprises the following elements:

a) Providing a composition comprising a solvent, a polymer binder and a silicone-based monomer,
b) Inducing an hydrolysis of the silicone-based monomer in the composition while shaping the forming gel in a shape fitting the encapsulating strucure, in order to form a gelated sample,
c) Placing the gelated sample in an alcoholic atmosphere.

Optionally, the first sub-step can further comprise the following steps:

a) Replacing the solvent remaining in the gelated sample by liquid $CO_2$,

b) Providing conditions such that said liquid $CO_2$ turns into supercritical $CO_2$,

c) Cooling the obtained sample into an aerogel sample,

d) Embedding the liquid crystal mixture in the aerogel sample.

The present invention also relates to a process for changing index of an optical article according to the present invention, comprising two steps consisting of:

a) operating the optical article in a first mode by generating a first electric field presenting a first voltage,

b) switching to a second mode, by generating a second electric field presenting a second voltage different from the first voltage,

wherein one of the first voltage or the second voltage is chosen so as to orient the liquid crystals of the liquid crystal mixture in, and the other one of the first voltage and second voltage is 0V.

The present invention will be more fully understood from the following detailed description of the embodiments thereof - to which the invention is not limited however - taken together with the drawings in which:

- Figure 1 is a schematic view of a device used to synthetize an aerogel,
- Figure 2 is a schematic view of an alternative way of synthetizing the aerogel, using a spacer,
- Figure 3 is a schematic view of the orientation of the optically non isotropic material molecules in the optical device of the invention, and
- Figure 4 are photos of an optical device according to the present invention between two crossed polarizers.

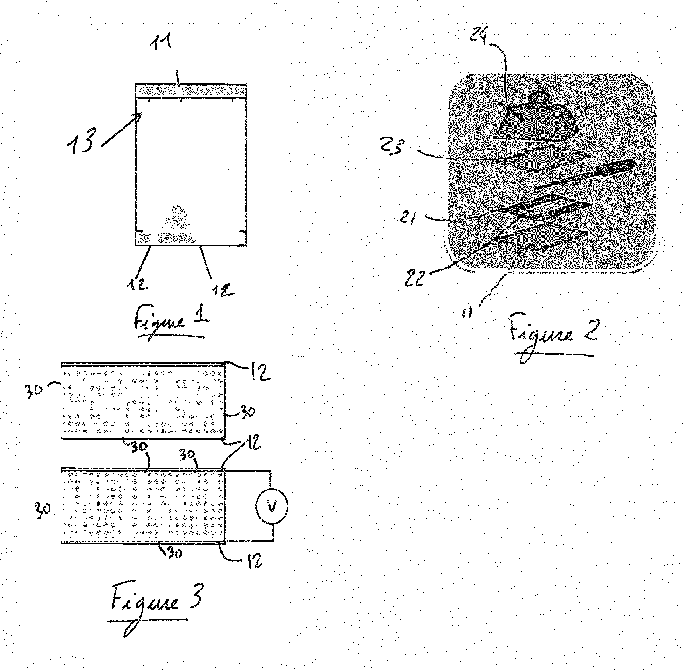

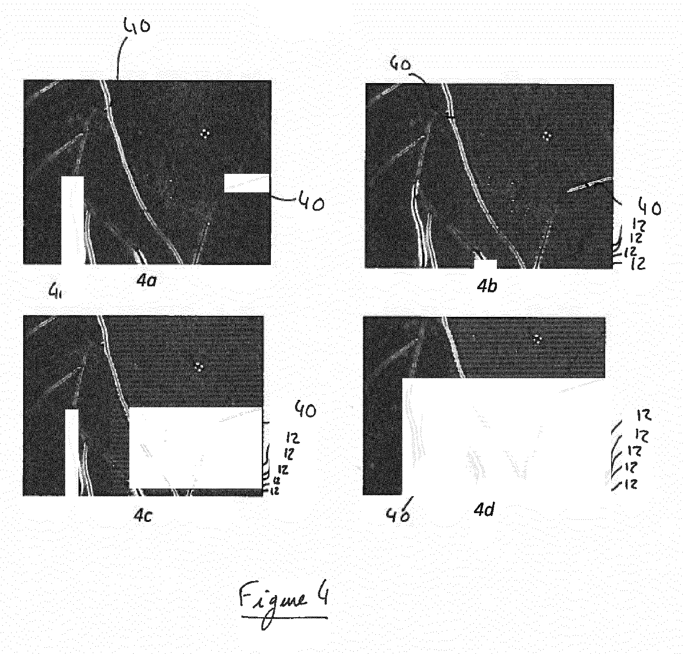

Figures 1 and 4 correspond to an embodiment of the present invention which allows good evidence of the properties of the optical article according to the invention, wherein the electrodes are positioned in the same plan. Figure 2 and 3 correspond to an embodiment with a higher interest in the field of optical spectacle, wherein two electrodes are positioned on each face of the optical device. However, the impregnated aerogel used is the same in both embodiments.

Synthesis of a gel

The following protocol allows obtaining uncracked aerogels, which present good resistance to impregnation by a liquid. Alternatively, the aerogel can be obtained according to the teachings of WO2012080658, which also provides satisfying aerogels for the purpose of the present invention.

A Tetramethoxylane (TMOS) precursor is used because its gelling properties are well known and the kinetics involved are fast and reliable. It is also possible to use different precursors, such as the tetraethoxylane, trimethoxysilane or Methyltrimethoxysilane without departing from the scope of the present invention.

Polyvinyle acetate (PVAc) with a molecular weight of 167,000 g per mole is used as a reagent of the synthesis of the aerogel. PVAc allows obtaining aerogels which are crack resistant, both during their synthesis and while being impregnating by a liquid of interest.

The aerogel is synthesized on a glass substrate 11 supporting Indium Tin Oxide (ITO) electrodes 12 , positioned parallel to each other and spaced from each other by about 20 $\mu$m, in a comb manner. A tank is delimited on the substrate thanks to a Polyethylene Terephthalate (PET) film 13 stuck to the substrate by an adhesive, as shown in figure 1. The combined thickness of the PET film and of the adhesive is chosen so as to generate an aerogel with a thickness inferior to 50 $\mu$m, preferably about 10 $\mu$m. A thickness of about 10 $\mu$m proved to reduce the amount of cracks.

Alternatively, a polytetrafluoroethylene (PTFE) spacer 21can be used, as shown on figure 2. The spacer is chosen with the desired thickness and can hold a window 22 designed to receive the sol.

An alcoholic PVAc solution is prepared. The PVAc used is for example the one sold by Aldrich, CAS: 9003-20-7, Ref: 18,248-6 and having a molecular weight of 167,000g per mole. The PVAc is dissolved in 96% ethanol at a concentration of 20% in weight. The complete dissolution of the PVAc takes at least four hour of steady agitation as well as several ultrasound sonications.

Alternatively, a partially hydrolyzed PVAc such as the one sold by Synthomer under the reference Synthomer Alcotex 359B could be used. The latter is already provided in a mixture methanol/methylacetate at a concentration of 26% by weight. It holds from 20 to 30% molar of hydrolyzed PVA groups, carried on chains with an average weight molecular weight of about 245,000 g/mol, which allows using the solution without any further modification.

A TMOS solution is incorporated to the PVAc solution. After a few minutes of additional stirring, an hydroxide ammonium solution at a concentration of $5.\ 10^{-2}$ mol/l is added as well, under steady agitation. The relative volumes of these three reagents are 50% of PVAc, 33% of TMOS, and 17% of hydroxide ammonium.

Alternatively, an aqueous ammonia solution at a concentration of $1.5.10^{-3}$ mol/1 can be used. This results in a gelling which lasts about 10 minutes and involves very little retraction of the gel in the gelling process.

Hydroxyde ammonium triggers the hydrolysis-condensation of TMOS, which leads to the gelling of the solution.

The stirring is preferably stopped before the end of the gelling process, e.g. about 2 minutes before the end of the gelling process so as to allow trapped air bubble to get back to the surface.

Optionally and so as to ease the laminating step, the glass substrate can be submitted to dioxygen plasma treatment. This allows cleaning the substrate and creating OH groups on the substrate so as to increase the adherence of the solution and of the ITO electrodes to the glass substrate.

An alternate way of preparing the glass substrate to the lamination of the gelling solution is to treat it with a regular sulfochromic acid solution by fully submerging each glass substrate in a sulfochromic acid solution at room temperature during one hour. Each substrate is then rinsed with distilled water, ITO electrodes are cleaned with a towel impregnated with 95% ethanol.

In order to obtain a layer, a drop of the gelling solution is positioned on the edges of the tank and rollers laminate the gelling solution into a liner layer on the glass substrate, which allows encapsulating the gelling solution into the tank.

Alternatively, when using a spacer 21, the gelling solution is carefully positioned in the center of the spacer window 22. The sample is then slowly covered with a silicon film 23 so as to avoid any air bubble, and a heavy plate 24 is applied on the silicon film so as to get rid of the surplus solution.

The laminated sample is then put in an alcoholic atmosphere for at least two hours so as to accelerate the ageing process of the gel while preventing any drying issue.

Turning the gel into an aerogel

The obtained gel is then put into a liquid $CO_2$ autoclave so as to turn it into an aerogel.

For that purpose, the reactor of the autoclave is first cooled to a temperature comprised between 0 and 10°C, preferably about 5°C. The liner layer of the gel is then separated from the glass substrate under alcoholic atmosphere so as to prevent untimely drying of the gel. The sample is then put into the reactor of the autoclave.

Liquid $CO_2$ is then incorporated in the autoclave so as to fill it completely, until pressure reaches about 60 bars. Temperature is then slowly raised back to room temperature which causes liquid $CO_2$ to replace the solvent trapped into the pores of the gel sample.

Temperature and pressure are then increased so as to turn the $CO_2$ into a supercritical phase. Typically, temperature is raised to 35 °C and pressure is raised to 100 bars. It is also possible to operate at 40°C and 90 bars; operating at a lower pressure is safer and can lead to a better yield.

Due to the $CO_2$ being in a single supercritical phase, the solvent can leave the gel sample as if evaporating but without submitting the organic network of the gel to important constraint.

Pressure inside the autoclave is then slowly decreased. Pressure inside the autoclave can be regulated by any suitable mean. Typically, pressure is regulated thanks to an evacuation valve. Pressure is then returned to atmospheric pressure. A neutral gas such as Argon or Azote is injected in the autoclave before retrieving the sample, so as to prevent any cracking when opening the reactor. The depressurizing step must be performed very slowly and can take up to more than six hours.

The obtained aerogel sample is then stored under vacuum so as to protect it from the atmospheric hygrometry which could induce cracks due to capillary strain.

Impregnating the aerogel

For the sake of this example, which corresponds to the embodiment illustrated on the figures, the liquid crystal sold by Merck under the reference E7 is used to impregnate the aerogel. Obviously, any suitable optically non isotropic material could be used without departing the scope of the present invention.

A drop of liquid crystal is positioned on the surface of the aerogel, e.g. by a micropipette. The liquid crystal impregnates the aerogel without causing any cracks. However, due to the liquid crystal being rather viscous, the impregnation can prove to be very slow. In order to accelerate the impregnation, the aerogel and the liquid crystal are heated to 80°C, which allows accelerating the impregnation without inducing any crack in the aerogel.

Characterization

The optical properties of the optical device according to the invention are appraised as follows, with and without the application of an electrical field.

Each molecule of optically non isotropic material typically shows an elongated shape along an axis. In its native form, such material is birefringent due to the anisotropic organization of the molecules.

However, when said material is impregnated into an aerogel in an optical device according to the invention and when no electrical field is applied, the molecules are oriented in an isotropic manner. This is shown on Figure 4 by observing the optical device according to the invention between to crossed polarizers: no birefringence is evidenced, except on a crack in the layer which corresponds to the white lines 40.

The applied electrical field is generated by applying a voltage between the electrodes 12. The molecules of optically non isotropic material tend to align their axis along the lines of fields. As such, if the electrodes are positioned face to face, perpendicularly to the incident light, the molecules 30 align in an homeotropic state which is equivalent to an isotropic state in the direction of the incident light, as shown on figure 3.

In another embodiment of the present invention, which corresponds to Figures 1 and 4, the electrodes are positioned in the same plan. In that case, the lines of field - and thus, the orientation of the molecules - are not positioned perpendicularly to the incident light. That causes the material to change from an isotropic state to an anisotropic state. When the material is in its anisotropic state, the overall optical device becomes birefringent. Such embodiment could have applications in devices in which transmission is not an issue and which can be combined to polarizers.

The orientation of the molecules along the lines of field causes the optical device to become birefringent which allows the region between the electrodes 12 to become visible, as shown in Figure 4. Figures 4a, 4b, 4c, and 4d consists of four different views of the same optical device exposed to an electrical field of 0V, 40V, 55V, and 60V respectively.

The change in the orientation of the molecules induces a change of optical index. When no electrical field is applied, the optical index of the optical device is n1 and can be expressed as a function of the ordinary index no and the extraordinary index ne of the optically non isotropic material, of the index of the aerogel na, and of the porosity ratio of the aerogel p, according to Equation 1.

$$n1 = p * \frac{(2no+ne)}{3} + (1-p) * na \qquad (1)$$

Similarly, when an electrical field is applied, the optical index of the optical device can be calculated according to Equation 2.

$$n2 = p * no + (1-p) * na \qquad (2)$$

It is thus possible to assess the change of optical index Δn when an electrical field is applied by taking the difference of n1 and n2, which leads to Equation 3.

$$\Delta n = p * \frac{ne-no}{3} \qquad (3)$$

When the optically non isotropic material is a liquid crystal with ne-no = 0.4, and when the aerogel has a porosity ratio of 80%, the optical device allows a change of optical index Δn of 0.106. The corresponding phase change can then be calculated by taking the thickness of the impregnated aerogel into account.

It is understood that the herein described embodiments do not limit the scope of the present invention and that it is possible to implement improvements without leaving the scope of the present invention.

Unless explicitly stated otherwise, the word "or" is equivalent to "and/or". Similarly, the word "one" or "a" is equivalent to "at least one", unless stated otherwise.

**Claims**

1. Optical device comprising :

   - an aerogel located in an encapsulating structure,
   - an optically non isotropic material presenting a refractive index which can be changed upon submitting said material to an electrical field, preferentially a liquid crystal mixture, embedded in the aerogel, and
   - a first and a second electrodes arranged to generate an electric field in the encapsulating structure.

2. The optical device of claim 1, wherein the optically non isotropic material is in an isotropic state when no electric field is applied in the encapsulating structure.

3. The optical device of any of claims 1 or 2, wherein the aerogel has a porosity ratio greater than 80%.

4. The optical device of any one of claims 1 to 3, wherein the optically non isotropic material is a nematic liquid crystal mixture.

5. The optical device of any one of claims 1 to 4, wherein the aerogel comprises remnant parts of Tetra-methoxysilane, Tetraethoxysilane, Trimethoxysilane or Methyltrimethoxysilane mixed in a polymer binder.

**6.** The optical device of any one of claims 1 to 5, wherein the aerogel is made by combining one of the group consisting of Tetra-methoxysilane, Tetraethoxysilane, Trimethoxysilane and Methyltrimethoxysilane with a polymer binder.

**7.** The optical device of any of claims 5 or 6, wherein the polymer binder is a polyvinyl acetate polymer with a weight average molecular weight greater than 50 000 g/mol, and preferably greater than 100 000 g/mol.

**8.** The optical device of any of claims 1 to 7, wherein the encapsulating structure is completely filled by the aerogel, and wherein the aerogel has a thickness greater than 10 $\mu$m, preferably greater than 20 $\mu$m, more preferably greater than 50 $\mu$m.

**9.** The optical device of any of claims 1 to 8, wherein the first and second electrodes are linked to an electronic device, configured to control the electric field generated in the encapsulating structure, and to a power source.

**10.** The optical device of any of claims 1 to 9, the optical device being a spectacle lens.

**11.** A process for manufacturing an optical article, comprising the steps of

    a. providing an encapsulating structure,
    b. providing a liquid crystal mixture embedded in an aerogel inside said encapsulating structure.

**12.** The process of claim 11, wherein step b comprises a first sub-step of forming an aerogel and a second substep of embedding a liquid crystal mixture in the aerogel.

**13.** The process according to claim 12, wherein the first sub-step comprises the following elements:

    a. providing a composition comprising a solvent, a polymer binder and a silicone-based monomer,
    b. inducing an hydrolysis of the silicone-based monomer in the composition while shaping the forming gel in a shape fitting the encapsulating strucure, in order to form a gelated sample,
    c. placing the gelated sample in an alcoholic atmosphere.

**14.** The process of claim 13, the first sub-step further comprising the following steps:

    a. replacing the solvent remaining in the gelated sample by liquid CO2,
    b. providing conditions such that said liquid CO2 turns into supercritical CO2,
    c. cooling the obtained sample into an aerogel sample.
    d. embedding the liquid crystal mixture in the aerogel sample.

**15.** A process for changing index of an optical article according to any of claims 1 to 10, comprising two steps consisting of:

    a. operating the optical article in a first mode by generating a first electric field presenting a first voltage,
    b. switching to a second mode, by generating a second electric field presenting a second voltage different from the first voltage,

wherein one of the first voltage or the second voltage is chosen so as to orient the liquid crystals of the liquid crystal mixture in , and the other one of the first voltage and second voltage is 0V.

Figure 1

Figure 2

Figure 3

Figure 4

**EP 3 521 868 A1**

Europäisches
Patentamt

European
Patent Office

Office européen
des brevets

# EUROPEAN SEARCH REPORT

Application Number

EP 18 30 5099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/160557 A1 (KIM HYUN SUB [KR] ET AL) 9 June 2016 (2016-06-09) | 1-9,11, 12 | INV. G02B1/06 |
| Y | * paragraphs [0050], [0051] * | 13-15 | |
| A | * figure 2A * | 10 | |
| | ----- | | |
| Y | US 2013/309453 A1 (BIVER CLAUDINE [FR] ET AL) 21 November 2013 (2013-11-21) | 13-15 | |
| A | * paragraphs [0021], [0068] - [0072] * | 10 | |
| | ----- | | |

TECHNICAL FIELDS
SEARCHED (IPC)

G02B

The present search report has been drawn up for all claims

| Place of search | Date of completion of the search | Examiner |
|---|---|---|
| Munich | 5 July 2018 | Denise, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5099

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2018

| Patent document cited in search report | | Publication date | Patent family member(s) | | Publication date |
|---|---|---|---|---|---|
| US 2016160557 | A1 | 09-06-2016 | CN | 105676488 A | 15-06-2016 |
| | | | DE | 102015219680 A1 | 09-06-2016 |
| | | | KR | 101526823 B1 | 05-06-2015 |
| | | | US | 2016160557 A1 | 09-06-2016 |
| US 2013309453 | A1 | 21-11-2013 | BR | 112013015254 A2 | 13-09-2016 |
| | | | CN | 103261923 A | 21-08-2013 |
| | | | EP | 2652533 A1 | 23-10-2013 |
| | | | FR | 2969313 A1 | 22-06-2012 |
| | | | JP | 5976009 B2 | 23-08-2016 |
| | | | JP | 2014501396 A | 20-01-2014 |
| | | | KR | 20140010939 A | 27-01-2014 |
| | | | US | 2013309453 A1 | 21-11-2013 |
| | | | WO | 2012080658 A1 | 21-06-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015136458 A
- FR 1654021
- WO 2010040954 A
- WO 2011015753 A
- WO 2011052013 A
- WO 2012080658 A

**Non-patent literature cited in the description**

- *CHEMICAL ABSTRACTS,* 9003-20-7